# EUROPÄISCHE PATENTSCHRIFT

(11) **EP 3 098 462 B1**
(45) Veröffentlichungstag und Bekanntmachung des Hinweises auf die Patenterteilung: **25.04.2018**
(21) Anmeldenummer: 15169437.9
(22) Anmeldetag: 27.05.2015
(51) Int. Cl.: F16C 3/02, B29C 70/88, B29C 70/08

(54) **ANTRIEBSWELLE IN HYBRIDBAUWEISE**
DRIVE SHAFT HAVING A HYBRID STRUCTURE
ARBRE D'ENTRAÎNEMENT DE CONSTRUCTION HYBRIDE

(43) Veröffentlichungstag der Anmeldung: 30.11.2016
(73) Patentinhaber: MTU Aero Engines AG, 80995 München (DE)
(72) Erfinder: Klötzer, Alexander, 82256 Fürstenfeldbruck (DE)

(56) Entgegenhaltungen:
- EP-A2- 2 636 509
- DE-T2- 60 030 220
- DE-U1- 8 617 628
- GB-A- 2 251 051

## Beschreibung

Die Erfindung betrifft eine Antriebswelle, insbesondere für eine Strömungsmaschine, in Hybridbauweise gemäß dem Oberbegriff des Patentanspruchs 1.

Aus der US 6 464 591 B1 ist bereits eine Antriebswelle in Hybridbauweise bekannt. Die dort gezeigte Antriebswelle umfasst eine Vielzahl von in wenigstens einem axialen Teilbereich in radialer Richtung übereinander angeordneter Schichten, wobei sich Metallschichten aus mindestens einem Metallwerkstoff und Faserverbundschichten aus mindestens einem Faserverbundwerkstoff miteinander abwechseln. Mittels dieses wenigstens einen axialen Teilbereichs werden Lasteinleitungselemente aus einem Metallwerkstoff, welche jeweils an einem Ende der Antriebswelle angeordnet sind, mit einem ausschließlich aus dem Faserverbundwerkstoff gebildeten Mittenbereich verbunden. Durch den schichtweisen Aufbau der Antriebswelle kann diese besonders hoch belastet werden und die jeweiligen Lasteinleitungselemente sind besonders gut mit dem Mittenbereich aus dem Faserverbundwerkstoff verbunden.

Nachteilig an dieser bereits bekannten Antriebswelle in Hybridbauweise ist, dass diese nicht besonders widerstandsfähig gegen hohe Temperaturen ist. Viele Faserverbundwerkstoffe sind weniger temperaturbeständig als Metallwerkstoffe. Insbesondere kann eine Temperatur eines Faserverbundwerkstoffs, bei welchem dieser in Brand gerät, wesentlich niedriger sein als bei einem Metallwerkstoff. Durch den Einfluss hoher Temperaturen kann sich eine Verbindung einer Werkstoffmatrix und darin gehaltener Fasern des Faserverbundwerkstoffs voneinander wenigstens teilweise trennen und die Antriebswelle so strukturell geschwächt werden.

Aus der DE 600 30 220 T2 ist eine Welle bekannt, welche ein Zwischenraumelement mit sich in Längsrichtung erstreckenden Hohlräumen aufweist. In jedem der Hohlräume ist ein Faserbündel angeordnet, wobei jedes Faserbündel mehrere miteinander verbundene Verstärkungsfasern aufweist, wobei das Zwischenraumelement eine Metallmatrix definiert, die Faserbündel umgibt und damit verbunden ist. Das Zwischenraumelement kann dabei radial außen von einer Metallschicht ummantelt sein.

Es ist Aufgabe der vorliegenden Erfindung, eine Antriebswelle in Hybridbauweise der eingangs genannten Art zu schaffen, welche besonders hitzebeständig ist.

Diese Aufgabe wird durch eine Antriebswelle mit den Merkmalen des Patentanspruchs 1 gelöst. Vorteilhafte Ausgestaltungen mit zweckmäßigen Weiterbildungen der Erfindung sind in den jeweiligen Unteransprüchen angegeben.

Die Erfindung betrifft eine Antriebswelle, insbesondere für eine Strömungsmaschine, in Hybridbauweise umfassend eine Vielzahl von in wenigstens einem axialen Teilbereich in radialer Richtung übereinander angeordneter Schichten, wobei sich Metallschichten aus mindestens einem Metallwerkstoff und Faserverbundschichten aus mindestens einem Faserverbundwerkstoff miteinander abwechseln. Erfindungsgemäß ist es dabei vorgesehen, dass eine radial äußerste Schicht des wenigstens einen axialen Teilbereichs der Antriebswelle eine Metallschicht ist, welche eine radial äußerste Faserverbundschicht radial außen komplett ummantelt. Dadurch wird die äußerste Faserverbundschicht durch die äußerste Metallschicht vor hohen Temperaturen geschützt, wodurch die Antriebswelle besonders hitzebeständig ist. Die die äußerste Faserverbundschicht ummantelnde äußerste Metallschicht kann auf die Antriebswelle einwirkende Wärme mit dem Metallwerkstoff wesentlich besser ableiten, als dies durch den Faserverbundwerkstoff möglich ist. Insbesondere können lokale, besonders hohe Wärmeeinträge besonders gut auf die gesamte Antriebswelle verteilt werden. Gegebenenfalls ist es dadurch auch möglich, einen weniger hitzebeständigen Faserverbundwerkstoff zu verwenden, wodurch die Antriebswelle besonders kostengünstig hergestellt werden kann. Außerdem kann die äußerste Metallschicht den Faserverbundwerkstoff vor anderen Umwelteinflüssen, wie beispielsweise aggressiven Medien, Lösungsmittel und/oder einer Brennreaktionen in einer Brennkammer besonders gut schützen.

Die Metallschicht kann beispielsweise als Metallfolie ausgebildet sein. Jede Metallschicht und jede Faserverbundschicht kann denselben Werkstoff aufweisen, es können jedoch auch unterschiedliche Werkstoffe verwendet werden. Dadurch ist es möglich, die Antriebswelle besonders belastungsgerecht und/oder leicht zu gestalten. Durch die radial äußerste Metallschicht weist die Antriebswelle auch eine besonders hohe Steifigkeit auf. Durch die Hybridbauweise der Antriebswelle kann die Antriebswelle besonders leicht sein. Insbesondere durch den schichtweisen Aufbau der Metallschichten und der Faserverbundschichten können gleichzeitig Torsionsmomente und Biegemomente besonders gut übertragen werden. Durch den äußeren Metallmantel ist die Antriebswelle besonders robust gegenüber für Transport, Handling und Montage.

Die radial äußerste Metallschicht ermöglicht zudem die Ausbildung einer besonders glatten Oberfläche der Antriebswelle. Durch eine glatte Oberfläche wird beispielsweise ein sekundäres Luftsystem, welches beispielsweise ein Kühlsystem sein kann, einer Strömungsmaschine, insbesondere eines Flugtriebwerks, besonders wenig beeinträchtigt. Zudem kann die Antriebswelle besonders einfach ausgewuchtet werden. Ausgleichsgewichte, insbesondere metallische Ausgleichsgewichte, können besonders einfach an der radial äußersten Metallschicht befestigt werden. Zum Beispiel können metallische Ausgleichsgewichte einfach an der Metallschicht angeschweißt werden. Durch die radial äußerste Metallschicht, welche auch als Metallmantel bezeichnet werden kann, kann zudem bereits eine Form für den weiteren schichtweisen Aufbau der Antriebswelle vorgegeben werden. Dadurch ist eine besonders einfache Fertigung möglich und es kann ein besonders hoher Rundlauf der Antriebswelle gewährleistet werden.

Vorzugsweise wird der Faserverbundwerkstoff in Gelegen in unterschiedlichen und abwechselnden Winkeln in unterschiedlichen Lagen geschichtet. Für eine besonders gute Drehmomentenübertragung sind die Fasern vorzugsweise bidirektional mit +/- 45 Grad ausgerichtet. Zur Biegemomentübertragung sind die Fasern vorzugsweise unidirektional mit 0 Grad ausgerichtet. Als Fertigungsverfahren eignet sich zum Beispiel ein integrales Fertigen der Antriebswelle mittels ECM/PECM Verfahren. Die Schichtdicken der Antriebswelle können belastungsgerecht unterschiedlich groß sein. Die Antriebswelle kann beispielsweise als Hochdruckwelle, Niederdruckwelle oder Welle für ein Hilfsaggregat eines Flugtriebwerks eingesetzt werden.

Durch einen besonders großen Überlappungsbereich in axialer Richtung zwischen Metallschichten und Faserverbundschichten ergibt sich eine besonders hohe Belastbarkeit der Antriebswelle gegenüber Biegung. Insgesamt ergibt sich ein radial außen geschlossener, hoch belastbarer Metalllaminat-Verbund.

Erfindungsgemäß ist es zudem vorgesehen, dass an wenigstens eine der Metallschichten und/oder einem Lasteinleitungselement der Antriebswelle mindestens ein Formschlusselement angeordnet ist, an welchem sich wenigstens eine der Faserverbundschichten abstützt. Damit können besonders gut Drehmomente von Metallschichten auf Faserverbundschichten und umgekehrt übertragen werden. Mittels des Formschlusselements ist eine besonders fasergerechte Struktur für die Verlegung des Gewebes, insbesondere von Rovings der Faserverbundschichten geschaffen. Das Formschlusselement kann beispielsweise eine Nase an dem Lasteinleitungselement oder an einer Metallschicht sein. Bei mehreren Schichten kann daraus eine Metallwerkstoff-Faserverbundwerkstoff-Verbindung erzeugt werden, die besonders hoch belastbar bezüglich Torsionkräften ist.

Weiterhin ist es erfindungsgemäß vorgesehen, dass das Formschlusselement in wenigstens eine der Faserverbundschichten hinein ragt. Dadurch kann sich die Faserverbundschicht weiter geradlinig axial entlang der Antriebswelle erstrecken, ohne dass sie für ein Abstützen an dem Formschlusselement in radialer Richtung gekrümmt werden muss. Dadurch ist eine besonders faserverbundwerkstoffgerechte Bauweise der Antriebswelle möglich.

Das wenigstens eine Lasteinleitungselement der Antriebswelle ist wenigstens mit der radial äußersten Metallschicht verbunden. Das Lasteinleitungselement kann beispielsweise aus einem Metallwerkstoff bestehen und axial benachbart zu dem axialen Teilbereich der Antriebswelle, der in Schichtbauweise gefertigt ist, angeordnet sein. Das Lasteinleitungselement kann dabei als ein massives Metallbauteil ausgebildet sein. Durch die Verbindung mit der radial äußersten Metallschicht ergibt sich eine geschlossene äußere Mantelfläche der Antriebswelle, wodurch diese besonders robust und hitzebeständig ist. Insbesondere kann die radial äußerste Metallschicht mit dem Lasteinleitungselement stoffschlüssig, zum Beispiel durch Elektronenstrahlschweißen, verbunden sein. Auch die weiteren Metallschichten können in ähnlicher Weise mit dem Lasteinleitungselement verbunden sein. Üblicherweise weist eine Antriebswelle wenigstens an beiden axialen Enden ein Lasteinleitungselement auf. Dieses Lasteinleitungselement fungiert dann als eine Art Verschlussteil für den schichtweisen Aufbau des axialen Teilbereichs der Antriebswelle. Dadurch ergibt sich eine starke Verbindung des Lasteinleitungselements mit der restlichen Antriebswelle, sodass Kräfte besonders gut übertragen werden können.

Lasteinleitungselemente werden bevorzugt in dem Bereich eingesetzt, in welchem eine Welle-Nabe- oder Welle-Welle-Verbindung angeordnet ist. An den Lasteinleitungselementen können Kräfte von anderen Bauteilen besonders gut auf die Antriebswelle übertragen werden. Beispielsweise kann ein weiteres Bauteil an einem Lasteinleitungselement aus einem massiven Metallkörper für eine Kraftübertragung einfach angeschraubt werden. Im Schichtbereich der Antriebswelle würde dies dagegen eine strukturelle Schwächung der Antriebswelle bedeuten.

In weiterer vorteilhafter Ausgestaltung der Erfindung ist es vorgesehen, dass die Antriebswelle als eine Hohlwelle ausgebildet ist und die radial innerste Schicht der Antriebswelle eine Metallschicht ist, welche eine radial innerste Faserverbundschicht radial innen komplett ummantelt. Die Vorteile der radial innersten Metallschicht, welche die radial innerste Faserverbundschicht innen ummantelt, sind analog zu dem äußereren Metallmantel. Mittels eines solchen inneren Metallmantels kann die innere Oberfläche der Hohlwelle besonders gut vor Umwelteinflüssen geschützt werden. Die Antriebswelle ist so auch an ihrer inneren Oberfläche besonders hitzebeständig und robust.

In weiterer vorteilhafter Ausgestaltung der Erfindung ist es vorgesehen, dass sich wenigstens eine radial innenliegende Metallschicht über einen kleineren axialen Teilbereich erstreckt als wenigstens eine der Faserverbundschichten. Zum Beispiel kann die Antriebswelle lediglich radial innenliegende Metallschichten in jeweiligen Endbereichen aufweisen, während sie in einem Mittenbereich ausschließlich innenliegende Faserverbundschichten aufweist. Dadurch kann die Welle einen besonders hohen Faserverbundwerkstoffanteil aufweisen und so besonders leicht sein und/oder besonders hohe Kräfte übertragen. Die radial innenliegende Metallschicht kann dabei jede Schicht mit Ausnahme der radial äußersten Metallschicht sein. Das heißt, auch in dem Mittenbereich der Antriebswelle ist immer als äußerste Schicht eine Metallschicht vorgesehen. Wenn die radial innerste Metallschicht die radial innerste Faserverbundschicht radial innen komplett ummantelt, handelt es sich bei der radial innenliegenden Metallschicht um eine Metallschicht zwischen der radial äußersten Metallschicht und der radial innersten Metallschicht. In diesem Fall ist also in dem Mittenbereich wenigstens eine Faserverbundschicht radial innen und radial außen von jeweils einer Metallschicht ummantelt.

In weiterer vorteilhafter Ausgestaltung der Erfindung ist es dabei vorgesehen, dass die radial innenliegende Metallschicht, welche sich über einen kleineren axialen Teilbereich erstreckt als wenigstens eine der Faserverbundschichten, sich nur in zwei axialen Endbereichen der Antriebswelle erstreckt. Dadurch kann die Antriebswelle in diesen Endbereichen besonders hitzebeständig und gleichzeitig besonders ausgebildet leicht sein. In den zwei axialen Endbereichen können die radial innenliegenden Metallschichten jeweilige Wärmeeinträge besonders gut an weitere Bauteile der Welle, welche sich außerhalb des axialen Teilbereichs mit dem Schichtaufbau an die zwei Endbereiche anschließen, ableiten. In einem Mittenbereich der Antriebswelle kann in diesem Fall ein besonders hoher Anteil an Faserverbundwerkstoff vorgesehen sein, wodurch die Antriebswelle besonders leicht ausgebildet ist.

In weiterer vorteilhafter Ausgestaltung der Erfindung ist es vorgesehen, dass die radial äußerste Metallschicht und/oder die radial innerste Metallschicht dicker als die übrigen Metallschichten sind. Dadurch ist die Antriebswelle besonders robust und kann Wärmeeinträge besonders gut ableiten. Insbesondere kann eine dickere Metallschicht, welche die radial äußerste oder die radial innerste Metallschicht ist, besonders gut als Ausgangsform für eine Fertigung des weiteren schichtweisen Aufbaus der Antriebswelle bilden. Die radial äußerste Metallschicht und die radial innerste Metallschicht können dabei unterschiedlich dick sein. Das heißt, die radial äußerste Metallschicht kann je nach Anforderungen an die Antriebswelle auch dicker als die radial innerste Metallschicht sein und umgekehrt.

In weiterer vorteilhafter Ausgestaltung der Erfindung ist es vorgesehen, dass die Faserverbundschicht aus einem keramischen Faserverbundwerkstoff gebildet ist. Insbesondere kann es sich bei dem keramischen Faserverbundwerkstoff um eine Hochtemperaturfaserkeramik handeln, beispielsweise aus C/C, C/SIC oder SIC/SIC. Dadurch ist die Antriebswelle besonders hitzebeständig.

In weiterer vorteilhafter Ausgestaltung der Erfindung ist es vorgesehen, dass die Schichten miteinander laminiert sind. Dies kann auch als Metalllaminat bezeichnet werden. Mittels eines Laminierens kann eine besonders gute Verbindung zwischen den Metallschichten und den Faserverbundschichten hergestellt werden. Insbesondere ergibt sich so eine besonders gute Übertragung bzw. Verteilung eines Wärmeeintrags auf die verschiedenen Schichten. So können auch örtlich hohe Wärmeeinträge gut abgeleitet werden, ohne dass die Antriebswelle beschädigt wird. Falls die äußerste und/oder die innerste Metallschicht dicker als die übrigen Metallschichten sind, können diese auch besonders gut als integriertes Formwerkzeug für ein Laminieren der übrigen Schichten miteinander dienen. Dies reduziert wiederum die Kosten für die Fertigung der Antriebswelle.

In weiterer vorteilhafter Ausgestaltung der Erfindung ist es vorgesehen, dass wenigstens eine Faser der Faserverbundschicht zum Abstützen an dem Formschlusselement um das Formschlusselement gewickelt ist. Dadurch ist es möglich, dass die um das Formschlusselement gewickelten Fasern besonders stark oder ausschließlich auf Zug belastet werden. Dies ist eine besonders werkstoffgerechte Belastung einer Faserverbundschicht, wodurch die Antriebswelle besonders große Kräfte übertragen und/oder besonders leicht sein kann.

In weiterer vorteilhafter Ausgestaltung der Erfindung ist es vorgesehen, dass zur Ausbildung des wenigstens einen axialen Teilbereichs der Antriebswelle wenigstens eine Metallschicht und eine Faserverbundschicht spiralförmig übereinander entlang einer Längsachse der Antriebswelle gewickelt sind. Die Schichten sind dann wenigstens teilweise aus beispielsweise wenigstens einer durchgehende Metallfolie und wenigstens einem durchgehenden Faserverbundwerkstoffgelege gebildet. Die äußerste Metallschicht kann dann dabei gebildet werden, indem die Metallfolie eine Wicklung mehr aufweist als das Faserverbundwerkstoffgelege. Durch den spiralförmigen Schichtaufbau der Antriebswelle kann diese besonders kostengünstig und schnell gefertigt werden.

Die Antriebswelle kann also beispielsweise in einem Verfahren gefertigt werden, bei welchem eine Metallfolie mit einem darauf oder darunter liegenden Faserverbundwerkstoffgelege spiralförmig entlang der Längsachse der Antriebswelle gewickelt wird. Soll die Antriebswelle als Hohlwelle ausgebildet sein, werden diese beiden Schichten dazu beispielsweise auf einen Kern aufgewickelt, welcher anschließend entnommen werden kann. Der Metallwerkstoff und der Faserverbundwerkstoff können unmittelbar bei dem Wickeln miteinander verbunden werden, insbesondere durch Laminieren, oder auch erst im Anschluss. Die radial äußerste und/oder die radial innerste Metallschicht können dabei dicker sein als die innenliegenden Metallschichten und als Form für ein Aufwickeln, einen schichtweisen Aufbau und/oder ein Laminieren dienen. Beispielsweise können alle innenliegenden Schichten durch das beschriebene Wickeln der Metallfolie über ein Faserverbundwerkstoffgelege erzeugt werden und die äußerste Schicht durch das anschließende Verbinden einer Metallhülle erzeugt werden. Diese Metallhülle kann beispielsweise auch aus zwei Schalen bestehen, welche miteinander verbunden, insbesondere verschweißt werden. Der axiale Teilbereich der Antriebswelle in Schichtaufbau kann an seinen jeweiligen radialen Enden durch die Lasteinleitungselemente abgeschlossen werden. Mit den Lasteinleitungselementen können die Metallschichten verbunden werden, insbesondere durch ein Verschweißen.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Dabei zeigt:
- Fig. 1: in einer ausschnittsweisen Schnittansicht einen axialen Teilbereich einer Antriebswelle mit einem Schichtaufbau;
- Fig. 2: in einer schematischen Perspektivansicht eine Schnittansicht der Antriebswelle gemäß Fig. 1;
- Fig. 3: in einer schematischen Perspektivansicht eine Schnittansicht einer alternativen Ausgestaltungsform der Antriebswelle gemäß Fig. 1; und
- Fig. 4: in einer schematischen Perspektivansicht eine weitere Schnittansicht der Ausgestaltungsform der Antriebswelle gemäß Fig. 3.

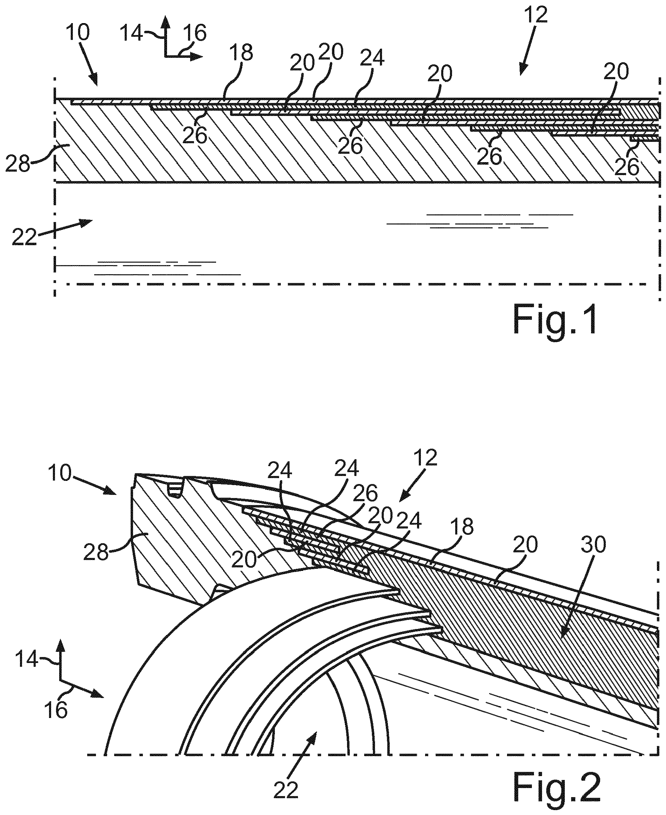

Fig. 1 zeigt in einer schematischen Schnittansicht ausschnittsweise eine Antriebswelle 10 für eine Strömungsmaschine, insbesondere ein Flugtriebwerk. Die Antriebswelle 10 ist in Hybridbauweise hergestellt. Die Antriebswelle 10 umfasst eine Vielzahl von wenigstens in einem axialen Teilbereich 12 in radialer Richtung übereinander angeordneten Schichten. Die radiale Richtung ist dabei in Fig. 1 bis Fig. 4 durch Pfeil 14 und die axiale Richtung durch Pfeil 16 kenntlich gemacht. Bei dem schichtweisen Aufbau der Antriebswelle 10 in dem axialen Teilbereich 12 wechseln sich Metallschichten 20 aus mindestens einem Metallwerkstoff und Faserverbundschichten 26 aus mindestens einem Faserverbundwerkstoff miteinander ab. Die Antriebswelle 10 ist dabei als eine Hohlwelle mit einem Hohlraum 22 ausgebildet. Eine radial äußerste Schicht 18 des wenigstens einen axialen Teilbereichs 12 der Antriebswelle 10 ist eine Metallschicht 20, welche eine radial äußerste Faserverbundschicht 24 radial außen komplett ummantelt. Diese radial äußerste Schicht 18 wird im Folgenden auch als radial äußerste Metallschicht 18 bezeichnet.

Durch diese Anordnung der Schichten ist die radial äußerste Faserverbundschicht 24 durch die radial äußerste Metallschicht 18 besonders gut vor Umwelteinflüssen geschützt. Insbesondere ein besonders hoher lokaler Wärmeeintrag kann so besonders gut abgeleitet werden. Insbesondere kann die radial äußerste Metallschicht 18 einen Wärmeeintrag an ein Lasteinleitungselement 28 ableiten, welches in axialer Richtung den schichtweisen Aufbau des axialen Teilbereichs 12 der Antriebswelle 10 begrenzt. Zu diesem Zweck ist die radial äußerste Metallschicht 18 beispielsweise mittels Elektronenstrahlschweißens mit dem Lasteinleitungselement 28 stoffschlüssig verbunden.

Das Lasteinleitungselement 28 dient zum Verbinden der Antriebswelle 10 mit beispielsweise einer weiteren Welle oder einem Rotor. Dafür kann es jeweilige Strukturelemente aufweisen, welche besonders gut in der Perspektivansicht der geschnittenen Darstellung der Antriebswelle 10 in Fig. 2 zu erkennen sind. Mit der radial äußersten Metallschicht 18 bildet das Lasteinleitungselement 28 eine bündige, glatte Oberfläche der Antriebswelle 10. Durch diese glatte Oberfläche wird beispielsweise ein sekundäres Luftsystem an der Antriebswelle 10 besonders geringfügig oder gar nicht beeinflusst. Auch kann die Antriebswelle 10 durch ihre radial äußere Metalloberfläche besonders gut ausgewuchtet werden. Zudem ist die Antriebswelle 10 so besonders robust beim Handling, beim Montieren und beim Transportieren.

Die verschiedenen Schichten 18, 20, 24, 26 der Antriebswelle 10 sind miteinander laminiert. Das heißt, sie sind beispielsweise verklebt. Die Metallschichten 20 erstrecken sich dabei unterschiedlich lang in axialer Richtung entlang der Antriebswelle 10. Dies ist besonders gut in Fig. 2 zu erkennen. Dadurch ist eine besonders belastungsgerechte Gestaltung der Antriebswelle 10 möglich. So kann zudem ein höherer Anteil der Antriebswelle 10 aus Faserverbundwerkstoff bestehen, wodurch sie besonders leicht ausgebildet ist. Wie in Fig. 2 zu erkennen ist, besteht die Antriebswelle 10 in einem Mittenbereich 30 ausschließlich aus Faserverbundwerkstoff, welcher von der radial äußersten Metallschicht 18 ummantelt ist. Dadurch ist eine besonders große Masseneinsparung möglich, wobei die Antriebswelle 10 trotzdem besonders hitzebeständig ist.

Alternativ oder zusätzlich kann eine radial innerste Faserverbundschicht durch eine radial innerste Metallschicht radial innen komplett ummantelt sein. Eine solche radial innere Ummantelung ist auch in dem Mittenbereich 30 möglich. Durch die innere Ummantelung ergeben sich ähnliche Vorteile bezüglich Hitzebeständigkeit und Robustheit der Antriebswelle 10 wie bei der äußeren Ummantelung.

Die radial innenliegenden Metallschichten 20, also alle Metallschichten 20, welche nicht die radial äußerste Metallschicht 18 bilden, können sich bei dem in Fig. 1 und Fig. 2 gezeigten Ausführungsbeispiel der Antriebswelle 10 über einen kleineren axialen Teilbereich als wenigstens eine der Faserverbundschichten 26 erstrecken. Dadurch ist eine besonders belastungsgerechte Gestaltung der Antriebswelle 10 möglich, wodurch diese leichter und/oder robuster sein kann.

Mehrere der Metallschichten 20 können auch durch eine durchgehende Metallfolie erzeugt werden, welche mit einem durchgehenden Faserverbundwerkstoffgelege spiralförmig übereinander entlang der Längsachse der Antriebswelle 10 gewickelt werden. Bei einer Hohlwelle kann dazu entweder ein später entnehmbarer Kern für das Aufwickeln vorgesehen sein oder die radial innerste Metallschicht besonders dick sein und damit eine Form für das Aufwickeln bilden. Die radial äußerste Metallschicht 18 kann dabei ebenfalls durch Wickeln gebildet werden. In diesem Fall wird beispielsweise die Metallfolie wenigstens einmal mehr gewickelt als ein Faserverbundwerkstoffgelege. Alternativ kann die radial äußerste Metallschicht 18 auch durch ein zusätzliches Element gebildet werden. Beispielsweise kann die radial äußerste Metallschicht 18 durch zwei Halbschalen, welche miteinander über der radial äußersten Faserverbundschicht 24 verbunden werden, gebildet werden. Die radial äußerste Metallschicht 18 kann auch durch eine Metallhülse gebildet sein. In beiden Fällen kann sie beispielsweise auch als Form für ein Laminieren und/oder ein Wickeln des restlichen schichtweisen Aufbaus dienen. Dadurch ist eine Fertigung besonders kostengünstig und einfach. Insbesondere kann so gegebenenfalls auf einen entnehmbaren Kern bei der Fertigung der als Hohlwelle ausgebildeten Antriebswelle 10 verzichtet werden.

Die Faserverbundschichten 26 können beispielsweise aus einem keramischen Faserverbundwerkstoff bestehen. Damit ist die Welle nochmals hitzebeständiger. Alternativ kann der Faserverbundwerkstoff auch aus einem weniger hitzebeständigen Faserverbundwerkstoff bestehen, wenn die radial äußerste Metallschicht 18 einen genügend großen Hitzeschutz bietet.

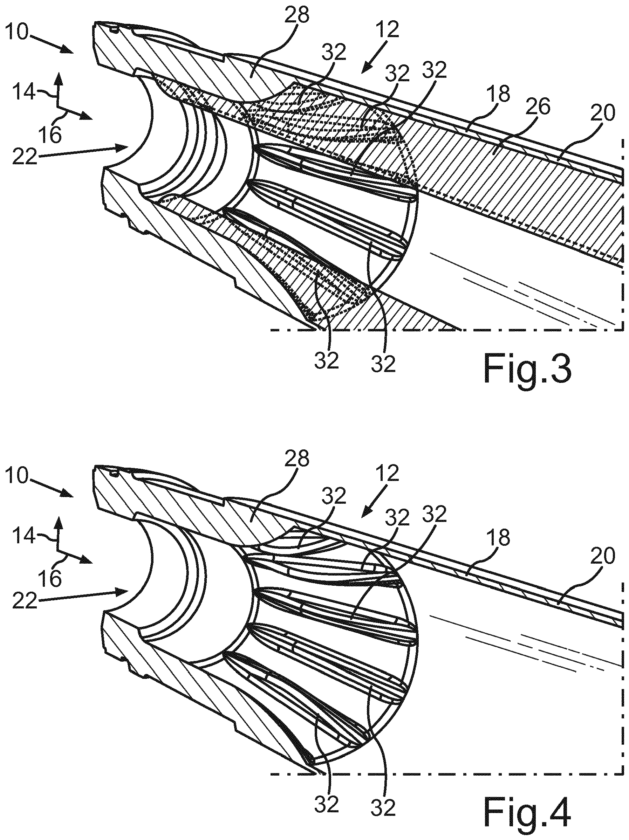

Die schematischen Perspektivansichten der Antriebswelle 10 in Fig. 3 und 4 zeigen eine alternative Ausgestaltungsform der Antriebswelle 10. Hier sind zusätzliche Formschlusselemente 32 in Umfangsrichtung nebeneinander an einer Innenseite des Lasteinleitungselements 28 angeordnet.

An diesen nasenförmig ausgebildeten Formschlusselementen 32 kann sich wenigstens eine der Faserverbundschichten 26 abstützen. Dadurch kann die Antriebswelle 10 besonders hohe Kräfte übertragen. Zur besseren Übersicht ist eine solche Faserverbundschicht 26 in Fig. 3 dargestellt, während sie in Fig. 4 nicht gezeigt ist, um die Formschlusselemente 32 besser erkennen zu können.

Die Formschlusselemente 32 können auch an einer der Metallschichten 20, insbesondere an der radial äußersten Metallschicht 18, angeordnet sein. Die Formschlusselemente 32 können dabei in mehrere der radial weiter innen liegenden Faserverbundschichten 26 hinein ragen. Die jeweiligen Faserverbundschichten 26 können sich für eine Kraftübertragung besonders gut an den Formschlusselementen 32 abstützen. Dadurch kann die Antriebswelle 10 besonders hohe Kräfte aufnehmen, ohne dass es zu einer Delamination der Metallschichten 20 mit den Faserverbundschichten 26 kommt. Insbesondere weist die Antriebswelle 10 so eine besonderes faserverbundwerkstoffgerechte Konstruktion auf. Insbesondere ist es möglich, dass einzelne Fasern der jeweiligen Faserverbundschichten 26 zum Abstützen an dem Formschlusselement 32 um das Formschlusselement 32 gewickelt sind. Dadurch werden diese Fasern überwiegend oder sogar ausschließlich mit Zug belastet. Faserverbundwerkstoffe können insbesondere Zuglasten gut aufnehmen. Auch dadurch wird eine besonders große Kraftübertragung durch die Antriebswelle 10 ermöglicht und/oder die Antriebswelle 10 ist so besonders leicht.

## Patentansprüche

1. Antriebswelle (10), insbesondere für eine Strömungsmaschine, in Hybridbauweise umfassend eine Vielzahl von in wenigstens einem axialen Teilbereich (12) in radialer Richtung (14) übereinander angeordneter Schichten (18, 20, 24, 26), wobei sich Metallschichten (20) aus mindestens einem Metallwerkstoff und Faserverbundschichten (26) aus mindestens einem Faserverbundwerkstoff miteinander abwechseln,
wobei eine radial äußerste Schicht (18) des wenigstens einen axialen Teilbereichs (12) der Antriebswelle (10) eine Metallschicht (20) ist, welche eine radial äußerste Faserverbundschicht (24) radial außen komplett ummantelt,
**dadurch gekennzeichnet, dass**
an wenigstens eine der Metallschichten (20) und/oder an einem Lasteinleitungselement (28) der Antriebswelle, mit welchem wenigstens die radial äußerste Metallschicht (18) verbunden ist, mindestens ein Formschlusselement (32) angeordnet ist, an welchem sich wenigstens eine der Faserverbundschichten (24, 26) abstützt, wobei das Formschlusselement (32) in wenigstens eine der Faserverbundschichten (24, 26) hinein ragt.

2. Antriebswelle (10) nach Anspruch 1,
**dadurch gekennzeichnet, dass**
die Antriebswelle (10) als eine Hohlwelle ausgebildet ist und die radial innerste Schicht der Antriebswelle (10) eine Metallschicht (20) ist, welche eine radial innerste Faserverbundschicht radial innen komplett ummantelt.

3. Antriebswelle (10) nach Anspruch 1,
**dadurch gekennzeichnet, dass**
sich wenigstens eine radial innenliegende Metallschicht (20) über einen kleineren axialen Teilbereich erstreckt als wenigstens eine der Faserverbundschichten (26).

4. Antriebswelle (10) nach Anspruch 3,
**dadurch gekennzeichnet, dass**
die radial innenliegende Metallschicht (20), welche sich über einen kleineren axialen Teilbereich erstreckt als wenigstens eine der Faserverbundschichten (26), sich nur in zwei axialen, sich gegenüberliegenden Endbereichen der Antriebswelle erstreckt.

5. Antriebswelle (10) nach einem der vorhergehenden Ansprüche,
**dadurch gekennzeichnet, dass**
die radial äußerste Metallschicht (18) und/oder die radial innerste Metallschicht dicker als die übrigen Metallschichten (20) sind.

6. Antriebswelle (10) nach einem der vorhergehenden Ansprüche,
**dadurch gekennzeichnet, dass**
die Faserverbundschicht (26) aus einem keramischen Faserverbundwerkstoff gebildet ist.

7. Antriebswelle (10) nach einem der vorhergehenden Ansprüche,
**dadurch gekennzeichnet, dass**
die Schichten (18, 20, 24, 26) miteinander laminiert sind.

8. Antriebswelle (10) nach einem der vorhergehenden Ansprüche,
**dadurch gekennzeichnet, dass**
wenigstens eine Faser der Faserverbundschicht (26) zum Abstützen an dem Formschlusselement (32) um das Formschlusselement (32) gewickelt ist.

9. Antriebswelle (10) nach einem der vorhergehenden Ansprüche,
**dadurch gekennzeichnet, dass**
zur Ausbildung des wenigstens einen axialen Teilbereichs (12) der Antriebswelle (10) wenigstens eine Metallschicht (20) und eine Faserverbundschicht (26) spiralförmig übereinander entlang einer Längsachse der Antriebswelle (10) gewickelt sind.

## Claims

1. A drive shaft (10), particularly for a turbomachine, having a hybrid structure comprising a plurality of stacked layers (18, 20, 24, 26) in at least one axial section (12) in a radial direction (14), wherein metal layers (20) made from at least one metallic material and fiber composite layers (26) made from at least one fiber composite material alternate with each other,
wherein a radially outermost layer (18) of the at least one axial section (12) of the drive shaft (10) is a metal layer (20) which radially completely encases a radially outermost fiber composite layer (24) on the outside,
**characterized in that**
at least one positive-locking element (32), on which at least one of the fiber composite layers (24, 26) is supported, is arranged on at least one of the metal layers (20) and/or a load application transmitting element (28) of the drive shaft, with which at least the radially outermost metal layer (18) is connected, wherein the positive-locking element (32) protrudes into at least one of the fiber composite layers (24, 26).

2. The drive shaft (10) according to claim 1,
**characterized in that**
the drive shaft (10) is formed as a quill shaft and the radially innermost layer of the drive shaft (10) is a metal layer (20), which completely encases a radially innermost fiber composite layer radially on the inside.

3. The drive shaft (10) according to claim 1,
**characterized in that**
at least one radially inner metal layer (20) extends over a smaller axial section than at least one of the fiber composite layers (26).

4. The drive shaft (10) according to claim 3,
**characterized in that**
the radially inner metal layer (20), which extends over a smaller axial section than at least one of the fiber composite layers (26), only extends over two opposite axial end sections of the drive shaft.

5. The drive shaft (10) according to any one of the previous claims,
**characterized in that**
the radially outermost metal layer (18) and/or the radially innermost metal layer are thicker than the remaining metal layers (20).

6. The drive shaft (10) according to any one of the previous claims,
**characterized in that**
the fiber composite layer (26) is formed from a ceramic fiber composite material.

7. The drive shaft (10) according to any one of the previous claims,
**characterized in that**
the layers (18, 20, 24, 26) are laminated with each other.

8. The drive shaft (10) according to any one of the previous claims,
**characterized in that**
at least one of the fibers from the fiber composite layer (26) is wound around the positive-locking element (32) to support it on the positive-locking element (32).

9. The drive shaft (10) according to any one of the previous claims,
**characterized in that**
at least one metal layer (20) and one fiber composite layer (26) are wrapped around each other in a spiral form along a longitudinal axis of the drive shaft (10) to form the at least one axial section (12) of the drive shaft (10).

## Revendications

1. Arbre d'entraînement (10), destiné en particulier à une turbomachine, ledit arbre d'entraînement de construction hybride comprenant une pluralité de couches (18, 20, 24, 26) disposées les unes sur les autres dans la direction radiale (14) dans au moins une zone axiale (12), des couches métalliques (20) constituées d'au moins une matière métallique et des couches de composite à base de fibres (26) constituées d'au moins un matériau composite à base de fibres étant disposées en alternance les unes avec les autres,
une couche (18) radialement la plus extérieure de l'au moins une zone axiale (12) de l'arbre d'entraînement (10) étant une couche métallique (20) qui enveloppe complètement, radialement à l'extérieur, une couche de composite à base de fibres (24) radialement la plus extérieure,
**caractérisé en ce que**
au moins un élément de liaison par complémentarité de formes (32), qui supporte au moins une des couches de composite à base de fibres (24, 26), est disposé sur au moins une des couches métalliques (20) et/ou sur un élément d'application de charge (28) de l'arbre d'entraînement, élément auquel est reliée au moins la couche métallique (18) radialement la plus extérieure, l'élément de liaison par complémentarité de formes (32) faisant saillie dans au moins une des couches de composite à base de fibres (24, 26).

2. Arbre d'entraînement (10) selon la revendication 1,
**caractérisé en ce que**
l'arbre d'entraînement (10) est conçu comme un arbre creux et la couche radialement la plus intérieure de l'arbre d'entraînement (10) est une couche métallique (20) qui enveloppe complètement, radialement à l'intérieur, une couche de composite à base de fibres radialement la plus intérieure.

3. Arbre d'entraînement (10) selon la revendication 1,
**caractérisé en ce que**
au moins une couche métallique (20) radialement intérieure s'étend sur une zone axiale plus petite qu'au moins une des couches de composite à base de fibres (26).

4. Arbre d'entraînement (10) selon la revendication 3,
**caractérisé en ce que**
la couche métallique (20) radialement intérieure, qui s'étend sur une zone axiale plus petite qu'au moins une des couches de composite à base de fibres (26), ne s'étend que dans deux zones d'extrémité axiales opposées de l'arbre d'entraînement.

5. Arbre d'entraînement (10) selon l'une des revendications précédentes,
**caractérisé en ce que**
la couche métallique (18) radialement la plus extérieure et/ou la couche métallique radialement la plus intérieure sont plus épaisses que les autres couches métalliques (20).

6. Arbre d'entraînement (10) selon l'une des revendications précédentes,
**caractérisé en ce que**
la couche de composite à base de fibres (26) est formée d'un matériau céramique composite à base de fibres.

7. Arbre d'entraînement (10) selon l'une des revendications précédentes,
**caractérisé en ce que**
les couches (18, 20, 24, 26) sont stratifiées les unes aux autres.

8. Arbre d'entraînement (10) selon l'une des revendications précédentes,
**caractérisé en ce que**
au moins une fibre de la couche de composite à base de fibres (26), destinée à être supportée par l'élément de liaison par complémentarité de formes (32), est enroulée autour de l'élément de liaison par complémentarité de formes (32).

9. Arbre d'entraînement (10) selon l'une des revendications précédentes,
**caractérisé en ce que**
au moins une couche métallique (20) et une couche de composite à base de fibres (26) sont enroulées en spirale l'une sur l'autre le long d'un axe longitudinal de l'arbre d'entraînement (10) pour former l'au moins une zone axiale (12) de l'arbre d'entraînement (10).
